# EUROPÄISCHE PATENTSCHRIFT

(11) **EP 4 500 043 B1**
(45) Veröffentlichungstag und Bekanntmachung des Hinweises auf die Patenterteilung: **10.06.2026**
(21) Anmeldenummer: 23710209.0
(22) Anmeldetag: 01.03.2023
(51) Int. Cl.: F16C 41/00, F16C 33/78, F16C 19/18

(54) **DICHTUNGSANORDNUNG FÜR RADLAGER UND RADLAGER MIT DIESER DICHTUNGSANORDNUNG**
SEALING ASSEMBLY FOR A WHEEL BEARING AND WHEEL BEARING WITH SUCH A SEALING ASSEMBLY
ENSEMBLE D'ÉTANCHÉITE POUR UN MOYEU DE ROUE ET MOYEU DE ROUE AVEC CET ENSEMBLE D'ETANCHEITE

(30) Priorität: 28.03.2022 DE 102022107234
(43) Veröffentlichungstag der Anmeldung: 05.02.2025
(73) Patentinhaber: Schaeffler Technologies AG & Co. KG, 91074 Herzogenaurach (DE)
(72) Erfinder: DLUGAI, Darius, 97525 Schwebheim (DE); KRAPF, Marco, 97705 Burkardroth (DE); KAISER, Andreas, 97440 Werneck (DE); MOCK, Christian, 97421 Schweinfurt (DE)
(74) Vertreter: Schaeffler Technologies
(86) Internationale Anmeldenummer: PCT/DE2023/100162
(87) Internationale Veröffentlichungsnummer: WO 2023/186207

(56) Entgegenhaltungen:
- EP-A2- 1 296 144
- JP-A- 2008 309 717
- JP-A- 2010 091 374
- US-A1- 2020 079 150

## Beschreibung

Die vorliegende Erfindung betrifft eine Dichtungsanordnung zur Abdichtung eines Radlagers für eine Radlagernabe, insbesondere für eine Radlagernabe mit einer Stirnverzahnung, eines Fahrzeugs, sowie ein Radlager für eine Radlagernabe, insbesondere für eine Radlagernabe mit einer Stirnverzahnung, eines Fahrzeugs.

### Stand der Technik

Dichtungen zur Abdichtung eines Radlagers sind im Stand der Technik hinreichend bekannt. So werden bspw. sogenannte Kassettendichtungen zur Abdichtung von Radlagern bei PKWs oder LKWs eingesetzt. Die Dichtungen dienen dazu, einen Wälzkörperraum des Radlagers gegen von außen eintretende Fremdstoffe, wie Wasser. Schmutzpartikel etc. zu schützen. Die Dichtungen sind dabei meist als zweiteilige Baugruppen ausgebildet, wobei eine erste Baugruppe mit einem feststehenden Element des Radlagers, bspw. mit dem Außenring des Radlagers, verbunden ist, und eine zweite Baugruppe mit einem rotierbaren Element des Radlagers, bspw. mit dem Innenring des Radlagers, verbunden ist.

Ferner können die Dichtungen, insbesondere an der zweiten Baugruppe, ein Encoder-Element aufweisen, das Signale, insbesondere in Form von Magnetfeldern, bereitstellt, die von einem Sensor, bspw. einem Drehzahlsensor erfasst und zur Auswertung an eine Steuerungseinheit weitergeleitet werden. Dabei ist eine Geometrie und/oder Ausrichtung des Encoders auf die Sensorposition abgestimmt.

Es hat sich nunmehr herausgestellt, dass ein weiterer Bedarf besteht, eine bekannte Dichtungsanordnung zur Abdichtung eines Radlagers zu verbessern. Insbesondere besteht ein weiterer Bedarf, eine Dichtungsanordnung zur Abdichtung eines Radlagers bereitzustellen, die eine auf eine Sensorposition abgestimmte Positionierung des Encoders im Wesentlichen unabhängig von einer Auslegung des Radlagers ermöglicht bzw. gewährleistet. JP 2010 091374 A offenbart eine Dichtungsanordnung zur Abdichtung eines Radlagers nach dem Oberbegriff des Anspruchs 1.

Vor diesem Hintergrund ist es eine Aufgabe der vorliegenden Erfindung, eine verbesserte Dichtungsanordnung zur Abdichtung eines Radlagers für eine Radlagernabe eines Fahrzeugs sowie ein verbessertes Radlager für eine Radlagernabe eines Fahrzeugs bereitzustellen, die insbesondere eine auf eine Sensorposition abgestimmte Positionierung des Encoders im Wesentlichen unabhängig von einer Auslegung des Radlagers ermöglicht bzw. gewährleistet.

### Offenbarung der Erfindung

Diese und andere Aufgaben, die beim Lesen der folgenden Beschreibung noch genannt werden oder vom Fachmann erkannt werden können, werden durch die Gegenstände der unabhängigen Ansprüche gelöst. Vorteilhafte Ausführungsformen und Weiterbildungen sind den Unteransprüchen und der nachfolgenden Beschreibung zu entnehmen.

Die erfindungsgemäße Dichtungsanordnung zur Abdichtung eines Radlagers für eine Radlagernabe, insbesondere für eine Radlagernabe mit einer Stirnverzahnung, eines Fahrzeugs, bspw. eines PKWs oder eines LKWs, weist eine Dichtungseinheit und eine Schleuderscheibe auf. Die Dichtungseinheit ist dazu eingerichtet, drehfest und ggf. axialfest mit einem Außenring des Radlagers verbunden zu sein. Die Schleuderscheibe ist dazu eingerichtet, drehfest und ggf. axialfest mit einem Innenring des Radlagers verbunden zu sein. Die Dichtungseinheit weist einen Dichtungsträger und ein Dichtungselement auf, das an dem Dichtungsträger angeordnet ist. Die Schleuderscheibe weist an einer in Bezug auf den Dichtungsinnenraum der Dichtungsanordnung außenliegenden Stirnfläche einen Encoder auf, der dazu eingerichtet ist, Magnetfelder bereitzustellen. Dabei weist der Encoder eine umlaufende Vertiefung auf, die sich in axialer Richtung erstreckt und einen Magnetisierungsbereich des Encoders nach radial außen begrenzt. Erfindungsgemäß erstreckt sich der Encoder in radialer Richtung bis unterhalb eines Dichtungssitzes der Schleuderscheibe.

Der Vorteil der erfindungsgemäßen Lösung liegt insbesondere darin, dass es die umlaufende Vertiefung ermöglicht, den Magnetisierungsbereich des Encoders und somit einen Magnetfeldverlauf, insbesondere in radialer Richtung, zu definieren. Dadurch ist es möglich, den Magnetisierungsbereich bzw. den Magnetfeldverlauf unabhängig von einer Radlagerkonfiguration, relativ zu einer Sensorposition zu positionieren. In der Regel ist die Sensorposition fest vorgegeben, weshalb der Encoder relativ zu dieser vorgegebenen Sensorposition anzuordnen ist.

Der Encoder ist ein Abschnitt, der Signale bereitstellt, die dazu eingerichtet sind, von einem Sensor erfasst zu werden. Der Magnetisierungsbereich des Encoders weist über den Umfang gleichmäßig verteilte Regionen unterschiedlicher magnetischer Polarität auf, d.h. magnetische Nord- und Südpole sind entlang der Umfangsrichtung alternierend angeordnet.

Insbesondere können die Signale des Encoders Magnetfelder sein, die von einem magnetoresistiven Sensor erfasst werden können. Ein Magnetfeld besitzt Magnetfeldkomponenten, die in alle drei Raumrichtungen, also in x-Richtung, in y-Richtung und in z-Richtung ausgeprägt sind. Dabei entspricht im Nachfolgenden beispielhaft die x-Richtung einer tangentialen Richtung bzw. einer Umfangsrichtung des Encoders, die y-Richtung einer radialen Richtung des Encoders und die z-Richtung einer axialen Richtung des Encoders. Die Magnetfeldkomponenten sind in der Umfangsrichtung sinusförmig ausgeprägt, wobei die verschiedenen Magnetfeldkomponenten jeweils unterschiedliche Amplituden aufweisen. Daraus ergeben sich über eine radiale Breite mehrere Bereiche, in denen die verschiedenen Magnetfeldkomponenten stärker oder schwächer ausgebildet sind.

Magnetoresistive Sensoren, insbesondere magnetoresistive Drehzahl-Sensoren, die bspw. auf die x-Komponente des Magnetfelds reagieren, sind gleichzeitig empfindlich für Querfelder, also für Magnetfelder in der y-Richtung und/oder in der z-Richtung. Ist ein solches Querfeld in einem Lesebereich des Sensors zu hoch, kann der Sensor in seiner Arbeitsweise gestört sein, woraus bspw. eine fehlerhafte Erkennung einer Pulszahl resultieren kann. Mit anderen Worten kann man sagen, dass die Signalerfassung des Sensors verbessert werden kann, wenn der Lesebereich des Sensors einen Bereich des Magnetfelds erfasst, in dem die Amplituden der gewünschten Magnetfeldkomponente, bspw. die x-Komponente, möglichst hoch ist und gleichzeitig die Amplituden der anderen Magnetfeldkomponenten, bspw. der y- und/oder z-Komponente möglichst niedrig sind.

Durch die umlaufende Vertiefung, insbesondere durch die Positionierung der umlaufenden Vertiefung in radialer Richtung, kann eine fehlerhafte Signalerfassung, bspw. durch seitliche Störfelder, insbesondere bei Sensoren, die in mehrere Achsen sensibel sind, reduziert oder gar verhindert werden. Ferner ist es möglich, das Radlager derart auszulegen, dass eine Lebensdauer erhöht werden kann. Insbesondere kann ein Radlager mit einem hohen Teilkreisdurchmesser eingesetzt werden, ohne die Position bzw. eine radiale Dimension des Magnetisierungsbereichs des Encoders im Wesentlichen zu beeinflussen.

Gemäß einer Ausführungsform ist der Magnetisierungsbereich des Encoders dazu eingerichtet, einen Erfassungsbereich zu definieren, der dazu eingerichtet ist, von einem Sensor, insbesondere einem Drehzahlsensor erfasst zu werden.

Der Erfassungsbereich ist in radialer Richtung gesehen etwa mittig, insbesondere leicht außermittig, zum Magnetisierungsbereich angeordnet. Das bedeutet, dass über eine Größe des Magnetisierungsbereichs in radialer Richtung eine Positionierung des Erfassungsbereichs in radialer Richtung beeinflusst bzw. festgelegt werden kann. Das bedeutet, dass die radiale Position und die radiale Höhe des Magnetisierungsbereiches so gewählt werden kann, dass der Erfassungsbereich, der die gewünschte Magnetfeldcharakteristik, d.h., die gewünschte Stärke der Magnetfelder in den drei Raumrichtungen aufweist, im Lesebereich des Sensors angeordnet ist. Somit ist eine Signalerfassung durch den Sensor verbessert.

Gemäß einer Ausführungsform ist die umlaufende Vertiefung dazu eingerichtet, den Erfassungsbereich relativ zum Sensor zu positionieren. Der Sensor weist einen Lesebereich auf, in dem er die von dem Encoder bereitgestellten Signale, insbesondere die Magnetfelder, erfasst. Somit bestimmt eine Positionierung des Magnetisierungsbereichs bzw. des Erfassungsbereichs des Encoders relativ zum Lesebereich des Sensors die Qualität der Signalerfassung. Eine optimale Ausrichtung des Erfassungsbereichs des Encoders relativ zum Lesebereich des Sensors entspricht im Wesentlichen einer Positionierung des Erfassungsbereichs in dem Lesebereich des Sensors. Hierbei kann ein Einfluss von seitlichen Störfeldern auf die Signalerfassung, insbesondere für Sensoren, die in mehrere Achsen sensibel sind, reduziert oder verhindert werden.

Gemäß einer Ausführungsform weist der Encoder ein elastomerartiges Trägermaterial, wie bspw. ein Gummimaterial, mit magnetisierbaren Partikeln, insbesondere mit Ferrit Partikeln, auf. Dadurch ist es möglich, den Encoder in ein Dichtungsmaterial zu integrieren. Das bedeutet, dass das elastomerartige Trägermaterial gleichzeitig als Dichtungsmaterial dient und die magnetisierbaren Partikel zur Magnetfelderzeugung dienen. Somit ist der Encoder bauraumsparend in die Dichtungsanordnung integriert.

Gemäß einer Ausführungsform weisen die magnetisierbaren Partikel, die radial innen von der umlaufenden Vertiefung angeordnet sind, einen permanenten Magnetisierungszustand auf. Die in das elastomerartige Trägermaterial eingebrachten magnetisierbaren Partikel sind zunächst nicht magnetisiert. Die Magnetisierung der magnetisierbaren Partikel erfolgt erst im weiteren Verlauf eines Herstellungsprozesses des Encoders bzw. der Dichtungsanordnung. Hierbei ist es insbesondere kostengünstig, wenn die magnetisierbaren Partikel in einer gesamten Masse des elastomerartige Trägermaterials gleichmäßig verteilt angeordnet sind. Die umlaufende Vertiefung unterbindet im weiteren Verlauf des Herstellungsprozesses eine Magnetisierung der magnetisierbaren Partikel, die in dem elastomerartigen Trägermaterial radial außerhalb der umlaufenden Vertiefung angeordnet sind. Mit andere Worten kann man sagen, dass die umlaufende Vertiefung eine Magnetisierung begrenzt und so eine gezielte Ausbildung der Magnetfelder ermöglicht. Ferner ist dadurch eine positionierte Magnetisierung möglich, die durch die Positionierung der umlaufenden Vertiefung in radialer Richtung beeinflusst werden kann.

Ein weiterer Aspekt der Erfindung betriff ein Radlager für eine Radlagernabe, insbesondere für eine Radlagernabe mit einer Stirnverzahnung, eines Fahrzeugs, bspw. eines PKWs oder eines LKWs. Das Radlager weist einen rotierbaren Innenring mit einer Innenringlaufbahn, einen feststehenden Außenring mit einer Außenringlaufbahn, eine Mehrzahl Wälzkörper, die zwischen dem Innenring und dem Außenring angeordnet sind, derart, dass sie bei einer Rotation des Innenrings relativ zum Außenring an der Innenringlaufbahn und der Außenringlaufbahn abwälzen, und eine Dichtungsanordnung auf, die zur Abdichtung des Radlagers dient. Dabei weist die Dichtungsanordnung eine Dichtungseinheit und eine Schleuderscheibe auf. Dabei ist die Dichtungseinheit drehfest und ggf. axialfest mit dem Außenring des Radlagers verbunden. Die Schleuderscheibe ist drehfest und ggf. axialfest mit dem Innenring des Radlagers verbunden. Die Dichtungseinheit weist ferner ein Dichtungsblech und ein Dichtungselement mit zumindest einer Dichtungslippe, insbesondere zwei oder mehr Dichtungslippen, auf, wobei das Dichtungselement an dem Dichtungsblech angeordnet ist. Die Schleuderscheibe weist an einer in Bezug auf den Dichtungsinnenraum der Dichtungsanordnung außenliegenden Stirnfläche einen Encoder auf, der dazu eingerichtet ist, Magnetfelder bereitzustellen. Dabei weist der Encoder eine umlaufende Vertiefung auf, die sich in axialer Richtung erstreckt und einen Magnetisierungsbereich des Encoders nach radial außen begrenzt.

Die umlaufende Vertiefung ermöglicht es, den Magnetisierungsbereich des Encoders und somit einen Magnetfeldverlauf zu definieren. Dadurch ist es möglich, den Magnetisierungsbereich bzw. den Magnetfeldverlauf unabhängig von einer Radlagerkonfiguration relativ zu einer Sensorposition zu positionieren. In der Regel ist die Sensorposition fest vorgegeben, weshalb der Encoder relativ zu dieser vorgegebenen Sensorposition anzuordnen ist.

Der Encoder ist ein Abschnitt, der Signale bereitstellt, die dazu eingerichtet sind, von einem Sensor erfasst zu werden. Der Magnetisierungsbereich des Encoders weist über den Umfang gleichmäßig verteilte Regionen unterschiedlicher magnetischer Polarität auf, d.h. magnetische Nord- und Südpole sind entlang der Umfangsrichtung alternierend angeordnet. Insbesondere können die Signale des Encoders Magnetfelder sein, die von einem magnetoresistiven Sensor erfasst werden können. Ein Magnetfeld besitzt Magnetfeldkomponenten, die in alle drei Raumrichtungen, also in x-Richtung, in y-Richtung und in z-Richtung ausgeprägt sind. Dabei entspricht im Nachfolgenden beispielhaft die x-Richtung einer tangentialen Richtung bzw. einer Umfangsrichtung des Encoders, die y-Richtung einer radialen Richtung des Encoders und die z-Richtung einer axialen Richtung des Encoders. Die Magnetfeldkomponenten sind in der Umfangsrichtung sinusförmig ausgeprägt, wobei die verschiedenen Magnetfeldkomponenten jeweils unterschiedliche Amplituden aufweisen. Daraus ergeben sich über eine radiale Breite mehrere Bereiche, in denen die verschiedenen Magnetfeldkomponenten stärker oder schwächer ausgebildet sind. Magnetoresistive Sensoren, insbesondere magnetoresistive Drehzahl-Sensoren, die bspw. auf die x-Komponente des Magnetfelds reagieren, sind gleichzeitig empfindlich für Querfelder, also für Magnetfelder in der y-Richtung und/oder in der z-Richtung. Ist ein solches Querfeld in einem Lesebereich des Sensors zu hoch, kann der Sensor in seiner Arbeitsweise gestört sein, woraus bspw. eine fehlerhafte Erkennung einer Pulszahl resultieren kann. Mit anderen Worten kann man sagen, dass die Signalerfassung des Sensors verbessert werden kann, wenn der Lesebereich des Sensors einen Bereich des Magnetfelds erfasst, in dem die Amplituden der gewünschten Magnetfeldkomponente, bspw. die x-Komponente, möglichst hoch ist und gleichzeitig die Amplituden der anderen Magnetfeldkomponenten, bspw. der y- und/oder z-Komponente möglichst niedrig sind. Durch die umlaufende Vertiefung, insbesondere durch die Positionierung der umlaufenden Vertiefung in radialer Richtung, kann eine fehlerhafte Signalerfassung, bspw. durch seitliche Störfelder, insbesondere bei Sensoren, die in mehrere Achsen sensibel sind, reduziert oder gar verhindert werden. Ferner ist es möglich, das Radlager derart auszulegen, dass eine Lebensdauer erhöht werden kann. Insbesondere kann ein Radlager mit einem hohen Teilkreisdurchmesser eingesetzt werden, ohne die Position bzw. eine radiale Dimension des Magnetisierungsbereichs des Encoders im Wesentlichen zu beeinflussen.

Erfindungsgemäß erstreckt sich der Encoder in radialer Richtung bis unterhalb eines Dichtungssitzes, also radial weiter nach innen als der Dichtungssitz, der Schleuderscheibe. Dadurch ist es möglich den Encoder, unabhängig von einer Innenringhöhe, insbesondere von einer Höhe eines Innenringbords, relativ zur Sensorposition anzuordnen. Dadurch ist es möglich, einen Teilkreisdurchmesser des Radlagers und/oder einen Durchmesser des Innenringbords zu erhöhen, ohne die Position des Erfassungsbereichs des Encoders zu verändern bzw. zu verschieben. Mit anderen Worten kann man sagen, dass der Teilkreisdurchmesser und/oder der Innenringbord erhöht werden können, wobei gleichzeitig ein Lesedurchmesser des Sensors beibehalten werden kann.

Gemäß einer Ausführungsform weist das Radlager ferner eine Schnittstellendichtung auf, die sich im Wesentlichen in axialer Richtung erstreckt und dazu eingerichtet ist, eine Schnittstelle bzw. eine Verbindungsstelle zwischen der Radlagernabe und einer Gelenkglocke abzudichten, wobei ein radial inneres Ende des Encoders in axialer Richtung zwischen dem Innenring und der Schnittstellendichtung angeordnet ist.

Dabei kann die Schnittstellendichtung einen radialen Bord aufweisen, der sich an einem dem Radlager zugewandten axialen Ende nach radial außen erstreckt. Aufgrund von Toleranzen, bspw. Fertigungstoleranzen kann zwischen dem Innenring, insbesondere dem Innenringbord, und der Schnittstellendichtung in axialer Richtung ein Spalt ausgebildet sein, der in einem Betriebszustand des Radlagers Korrosion ausgesetzt sein kann. Die Anordnung des radial inneren Endes des Encoders in axialer Richtung zwischen dem Innenring und der Schnittstellendichtung ermöglicht es, den Spalt in axialer Richtung zu reduzieren oder zu schließen und somit Korrosion in diesem Bereich zu reduzieren oder zu verhindern. Insbesondere kann das radial innere Ende des Encoders in axialer Richtung gesehen zwischen dem Innenring und der Schnittstellendichtung gequetscht bzw. geklemmt sein. Die Schnittstellendichtung kann auch als Wälznietbundabdichtung bezeichnet werden.

Gemäß einer Ausführungsform weist das radial innere Ende des Encoders einen ersten Vorsprung auf, der sich in axialer Richtung erstreckt und dazu eingerichtet ist, mit der Schnittstellendichtung dichtend in Kontakt zu sein. Zusätzlich oder alternativ weist das radial innere Ende des Encoders einen zweiten Vorsprung auf, der sich in axialer Richtung erstreckt und dazu eingerichtet ist, mit dem Innenring dichtend in Kontakt zu sein.

Der erste Vorsprung und/oder der zweite Vorsprung stellen beim in Kontaktkommen mit der Schnittstellendichtung und/oder dem Innenring eine axial umfänglich verlaufende, abdichtende Linienberührung her. Darüber hinaus kann durch die Vorsprünge eine zulässige Toleranz für eine axiale Positionierung des radial inneren Endes des Encoders vergrößert, insbesondere verdoppelt, werden.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Teildarstellung eines Radlagers gemäß einer Ausführungsform der Erfindung,
- Fig. 2: schematische Teildarstellungen von Radlagern, wobei Fig. 2(a) ein Radlager gemäß einer Ausführungsform der Erfindung abbildet, und Fig. 2(b) ein aus dem Stand der Technik bekanntes Radlager abbildet; und
- Fig. 3: schematische Teildarstellungen von Radlagern, wobei Fig. 3(a) ein Radlager gemäß einer Ausführungsform der Erfindung abbildet und Fig. 3(b) ein Radlager gemäß einer weiteren Ausführungsform der Erfindung abbildet.

Die Figuren sind lediglich schematischer Natur und dienen nur dem Verständnis der Erfindung. Die gleichen Elemente sind mit denselben Bezugszeichen verstehen.

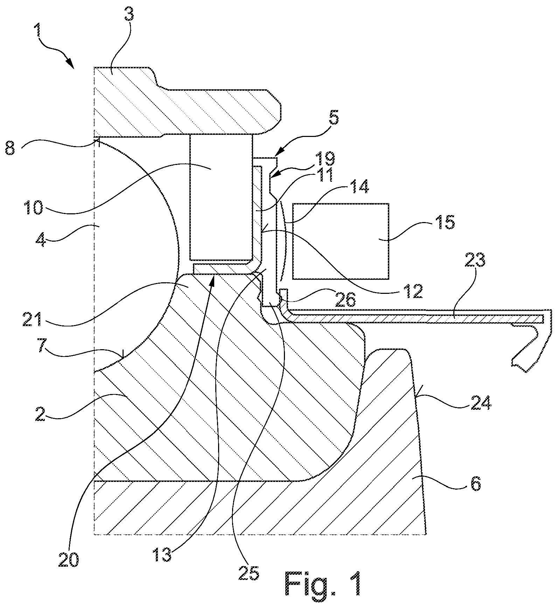

Fig. 1 zeigt ausschnittsweise ein beispielhaftes Radlager 1 gemäß einer Ausführungsform der Erfindung in einer Schnittdarstellung. Das Radlager 1 weist einen Innenring 2, einen Außenring 3, Wälzkörper 4 und eine Dichtungsanordnung 5 auf. Der Innenring 2 ist drehfest mit einer rotierbaren Radnabe 6 gekoppelt und der Außenring 3 ist drehfest mit einem feststehenden Element, bspw. einem Gehäuseabschnitt (nicht dargestellt), gekoppelt. Zwischen dem Innenring 2 und dem Außenring 3 sind eine Mehrzahl Wälzkörper 4 angeordnet, die bei einer Relativbewegung zwischen dem Innenring 2 und dem Außenring 3 entlang einer Innenringlaufbahn 7 und einer Außenringlaufbahn 8 abwälzen.

Die Dichtungsanordnung 5 ist in einem Spalt zwischen dem Innenring 2 und dem Außenring 3 angeordnet und dazu eingerichtet, ein Eindringen von Schmutzpartikeln, wie Wasser, Schlamm etc. in einen Wälzkörperraum 9 des Radlagers 1, in dem die Wälzkörper 4 angeordnet sind, zu reduzieren oder zu verhindern. Die Dichtungsanordnung 5 weist eine Dichtungseinheit 10 und eine Schleuderscheibe 11 auf, wobei die Dichtungseinheit 10, die hier vereinfacht als Block dargestellt ist, dreh- und axialfest mit dem Außenring 3 gekoppelt ist. Die Schleuderscheibe 11 ist dreh- und axialfest mit dem Innenring 2 des Radlagers 1 gekoppelt und weist auf einer dem Wälzkörperraum 9 abgewandten, außenseitigen Stirnseite 12 einen Encoder 13 auf.

Der Encoder 13 ist aus einem elastomerartigen Trägermaterial, wie bspw. ein Gummimaterial, mit magnetisierbaren Partikeln ausgebildet, die zumindest teilweise einen magnetisierten Dauerzustand aufweisen und in diesem Zustand ein Magnetfeld 14 ausbilden, das von einem magnetoresistiven Sensor 15 erfasst werden kann. Der Sensor 15 weist einen Lesebereich auf, der dazu eingerichtet ist, das Magnetfeld 14 zu erfassen. Die Position des Sensors 15 ist in der Regel vorgegeben, sodass der Encoder 13 relativ zum Sensor 15 derart anzuordnen ist, dass der Lesebereich des Sensors 15 das Magnetfeld 14 möglichst störungsfrei erfassen kann. Der Sensor 15 ist insbesondere ein Drehzahlsensor, bspw. ein ABS-Sensor, also ein Sensor, der zur Steuerung eines Antiblockiersystems (ABS) eines Fahrzeugs genutzt wird.

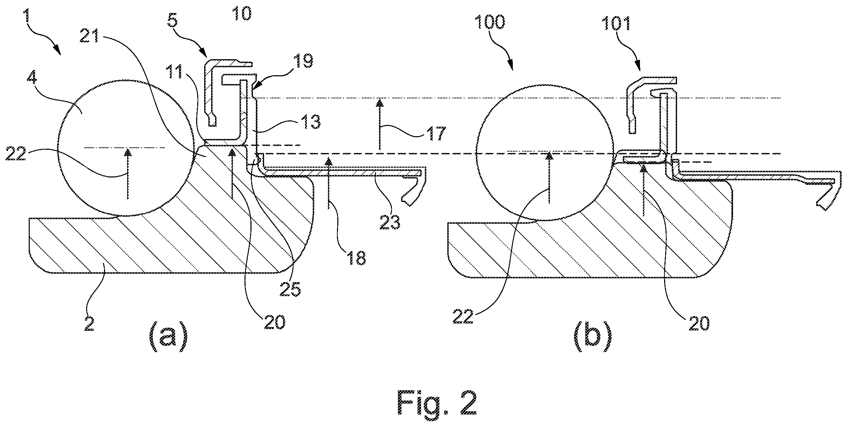

Die Position und Ausbildung des Magnetfelds 14 ist abhängig von einem Magnetisierungsbereich 16 des Encoders 13 in radialer Richtung R. Der Magnetisierungsbereich 16 kann auch als Spurbreite 16 bezeichnet werden, und entspricht der halben Differenz zwischen einem Außendurchmesser 17 und einem Innendurchmesser 18 des Encoders 13 (siehe Fig. 2), wobei ein Erfassungsbereich, der in radialer Richtung R etwa mittig, oder leicht außermittig zur Spurbreite 16 angeordnet ist, in dem Lesebereich des Sensors 15 angeordnet ist, um den Einfluss von seitlichen Störfeldern und anderen Fehlerquellen zu reduzieren und somit die Signalerfassung durch den Sensor 15 zu verbessern.

Gemäß einer Ausführungsform der Erfindung weist der Encoder 13 eine umlaufende Vertiefung 19 auf, die sich in axialer Richtung A erstreckt. Die umlaufende Vertiefung 19 ist dazu eingerichtet, eine Magnetisierung der magnetisierbaren Partikel, die radial außerhalb der Vertiefung 19 in dem Gummimaterial angeordnet sind zu unterbinden. Mit anderen Worten kann man sagen, dass die Vertiefung 19 die Magnetisierung der magnetisierbaren Partikel und somit die Ausbildung der Spurbreite nach radial außen begrenzt. Darüber hinaus ragt der Encoder 13 nach radial innen bis unterhalb eines Dichtungssitzes 20. Der Dichtungssitz 20 beschreibt die Position, an der die Schleuderscheibe 11 auf dem Innenring 2, insbesondere mittels eines Presssitzes, angeordnet ist.

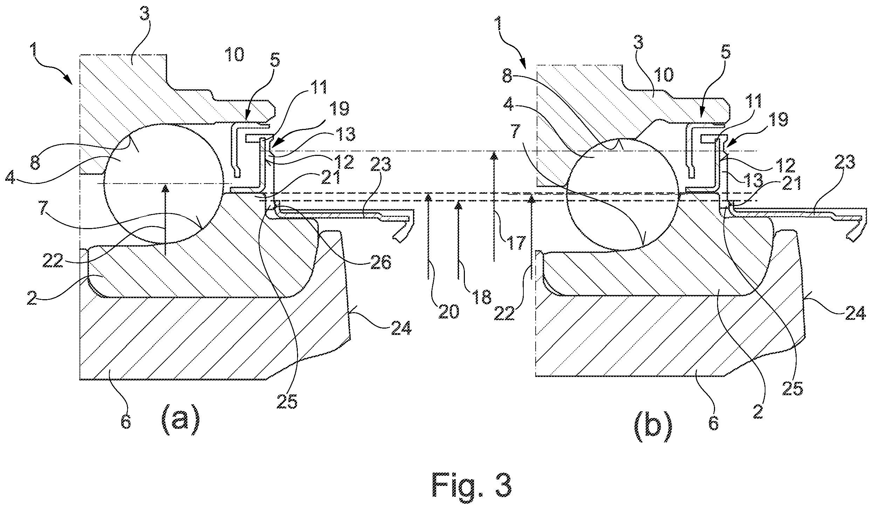

Somit ist es möglich, durch die Positionierung der Vertiefung 19 in dem Gummimaterial des Encoders 13 den Außendurchmesser 17 des Encoders 13 festzulegen, und so die Spurbreite 16 nach radial außen zu begrenzen. Darüber hinaus ist es möglich, den Encoder 13 nach radial innen über den Dichtungssitz 20 hinaus zu verlängern und somit den Innendurchmesser 18 des Encoders 13 festzulegen und so die Spurbreite 16 nach radial innen zu begrenzen. Somit ist es möglich, die Position des Encoders 13 unabhängig von einer Position des Dichtungssitzes 20 festzulegen, was eine Ausrichtung des Encoders 13 relativ zum Lesebereich des Sensors 15 (siehe Fig. 1) unabhängig von der Auslegung des Radlagers 1 ermöglicht, wie bespielhaft durch die Fig. 2(a) und 2(b) und die Fig. 3(a) und 3(b) veranschaulicht dargestellt. Ferner kann so die Auslegung des Radlagers 1 im Wesentlichen unabhängig von der vorgegebenen Position des Sensors 15 gewählt werden, was es ermöglicht das Radlager 1 an die Kräfte, die in einem Betriebszustand auf das Radlager 1 wirken, anzupassen und somit insbesondere die Lebensdauer des Radlagers 1 zu verbessern.

Fig. 2(a) zeigt einen Teilausschnitt des Radlagers 1 gemäß einer Ausführungsform der Erfindung und Fig. 2(b) zeigt einen Teilausschnitt eines beispielhaften, aus dem Stand der Technik bekannten Radlagers 100. Es ist zu erkennen, dass für eine identische Anordnung der Spurbreite 16 des Encoders 13, die Dichtungsanordnung 5 gemäß einer Ausführungsform der Erfindung es ermöglicht, ein Radlager 1 mit einem höheren Innenringbord 21 und damit einem radial weiter außen positionierten Dichtungssitz 20 zu verwenden als eine aus dem Stand der Technik bekannte Dichtungsanordnung 101.

Fig. 3(a) und 3(b) zeigen jeweils einen Teilausschnitt des Radlagers 1 gemäß einer Ausführungsform der Erfindung. Bei Betrachtung der Fig. 3(a) und 3(b) wird ersichtlich, dass die Dichtungsanordnung 5 es ferner auch ermöglicht, einen Teilkreisdurchmesser 22 zu variieren, ohne die Position der Spurbreite 16 des Encoders 13 zu verändern.

Die Radlager 1, wie in den Fig. 1, 2(a), 3(a) und 3(b) in verschiedenen beispielhaften Ausführungsformen gezeigt, weisen ferner jeweils eine Schnittstellendichtung 23, die auch als Wälznietbundabdichtung bezeichnet werden kann, auf. Die Schnittstellendichtung 23 ist dazu eingerichtet eine axiale Schnittstelle zwischen der Radnabe 6 und einem weiteren Element, wie bspw. einer Gelenkglocke (nicht dargestellt) abzudichten. Die Schnittstelle kann insbesondere als ein Verzahnungseingriff zwischen einer Stirnverzahnung 24 der Radnabe 6 und einer entsprechend an dem weiteren Element ausgebildeten Stirnverzahnung (nicht dargestellt) ausgebildet sein.

Eine axiale Position der Schnittstellendichtung 23 kann toleranzbedingt variieren, wodurch ein Spalt zwischen der Schnittstellendichtung 23 und dem Innenring 2 ausgebildet werden kann. Durch eine Positionierung eines radial inneren Encoder-Endes 25 in axialer Richtung A zwischen den Innenring 2 und der Schnittstellendichtung 23 kann ein solcher Spalt abgedichtet, und so vor Korrosionsbildung geschützt werden. Das radial innere Encoder-Ende 25 ist insbesondere zwischen dem Innenring 2 und der Schnittstellendichtung 23 geklemmt bzw. gequetscht, sodass es sowohl mit dem Innenring 2 als auch mit der Schnittstellendichtung 23 dichtend in Kontakt ist. Darüber hinaus ist an dem radial inneren Encoder-Ende 25 ein umlaufender Vorsprung 26 ausgebildet, der sich in axialer Richtung A zur Schnittstellendichtung 23 hin erstreckt. Der Vorsprung 26 ist insbesondere konisch, also zu Schnittstellendichtung 23 hin zulaufend, ausgebildet und stellt somit axial umfänglich eine abdichtende Linienberührung an der Schnittstellendichtung 23 her. Ferner kann ein solcher Vorsprung zusätzlich oder alternativ in axialer Richtung A zum Innenring 2 hin ausgebildet sein (nicht dargestellt). Der zumindest eine Vorsprung 26 ermöglicht es, eine Toleranz für die axiale Positionierung der Schnittstellendichtung 23 zu vergrößern, insbesondere mit je einem Vorsprung 26 auf beiden Seiten des radial inneren Endes 25 zu verdoppeln.

### Bezugszeichenliste

- 1: Radlager
- 2: Innenring
- 3: Außenring
- 4: Wälzkörper
- 5: Dichtungsanordnung
- 6: Radnabe
- 7: Innenringlaufbahn
- 8: Außenringlaufbahn
- 9: Wälzkörperraum
- 10: Dichtungseinheit
- 11: Schleuderscheibe
- 12: Stirnseite
- 13: Encoder
- 14: Magnetfeld
- 15: Sensor
- 16: Magnetisierungsbereich/Spurbreite
- 17: Außendurchmesser
- 18: Innendurchmesser
- 19: Vertiefung
- 20: Dichtungssitz
- 21: Innenringbord
- 22: Teilkreisdurchmesser
- 23: Schnittstellendichtung
- 24: Stirnverzahnung
- 25: radial inneres Ende
- 26: Vorsprung

- 100: Radlager (Stand der Technik)
- 101: Dichtungsanordnung (Stand der Technik)

- A: axiale Richtung
- R: radiale Richtung

## Patentansprüche

1. Dichtungsanordnung (5) zur Abdichtung eines Radlagers (1) für eine Radlagernabe (6) eines Fahrzeugs, aufweisend:
eine Dichtungseinheit (10), die dazu eingerichtet ist, drehfest mit einem Außenring (3) des Radlagers (1) verbunden zu sein, und
eine Schleuderscheibe (11), die dazu eingerichtet ist, drehfest mit einem Innenring (2) des Radlagers (1) verbunden zu sein,
wobei die Dichtungseinheit (10) einen Dichtungsträger und ein Dichtungselement aufweist, das an dem Dichtungsträger angeordnet ist,
wobei die Schleuderscheibe (11) an einer außenliegenden Stirnfläche (12) einen Encoder (13) aufweist, der dazu eingerichtet ist, Magnetfelder (14) bereitzustellen,
wobei der Encoder (13) eine umlaufende Vertiefung (19) aufweist, die sich in axialer Richtung (A) erstreckt und einen Magnetisierungsbereich (16) des Encoders (13) nach radial außen begrenzt, **dadurch gekennzeichnet, dass** sich der Encoder (13) in radialer Richtung (R) bis unterhalb eines Dichtungssitzes (20) der Schleuderscheibe (11) erstreckt.

2. Dichtungsanordnung (5) nach Anspruch 1, wobei der Magnetisierungsbereich (16) des Encoders (13) einen Erfassungsbereich definiert, die dazu eingerichtet ist, von einem Sensor (15) erfasst zu werden.

3. Dichtungsanordnung (5) nach Anspruch 2, wobei die umlaufende Vertiefung (19) dazu eingerichtet ist, den Erfassungsbereich relativ zum Sensor (15) zu positionieren.

4. Dichtungsanordnung (5) nach einem der Ansprüche 1 bis 3, wobei der Encoder (13) ein elastomerartiges Trägermaterial mit magnetisierbaren Partikeln aufweist.

5. Dichtungsanordnung (5) nach Anspruch 4, wobei die magnetisierbaren Partikel, die radial innen von der umlaufenden Vertiefung (19) angeordnet sind, einen permanenten Magnetisierungszustand aufweisen.

6. Radlager (1) für eine Radlagernabe (6) eines Fahrzeugs, aufweisend:
einen rotierbaren Innenring (2) mit einer Innenringlaufbahn (7),
einen feststehenden Außenring (3) mit einer Außenringlaufbahn (8),
eine Mehrzahl Wälzkörper (4), die zwischen dem Innenring (2) und dem Außenring (3) angeordnet sind, derart, dass sie bei einer Rotation des Innenrings (2) relativ zum Außenring (3) an der Innenringlaufbahn (7) und der Außenringlaufbahn (8) abwälzen, und
eine Dichtungsanordnung nach Anspruch 1.

7. Radlager (1) nach Anspruch 6, ferner aufweisend eine Schnittstellendichtung (23), die sich im Wesentlichen in axialer Richtung (A) erstreckt und dazu eingerichtet ist, eine Schnittstelle zwischen der Radlagernabe (6) und einer Gelenkglocke abzudichten, wobei ein radial inneres Ende (25) des Encoders (13) in axialer Richtung (A) zwischen dem Innenring (2) und der Schnittstellendichtung (23) angeordnet ist.

8. Radlager (1) nach Anspruch 7, wobei das radial innere Ende (25) des Encoders (13) einen ersten Vorsprung (26) aufweist, der sich in axialer Richtung (A) erstreckt und dazu eingerichtet ist, mit der Schnittstellendichtung (23) dichtend in Kontakt zu sein.

9. Radlager (1) nach Anspruch 7 oder 8, wobei das radial innere Ende (25) des Encoders (13) einen zweiten Vorsprung aufweist, der sich in axialer Richtung (A) erstreckt und dazu eingerichtet ist, mit dem Innenring (2) dichtend in Kontakt zu sein.

## Claims

1. A sealing assembly (5) for sealing a wheel bearing (1) for a wheel bearing hub (6) of a vehicle, having:
a sealing unit (10) which is designed to be connected to an outer ring (3) of the wheel bearing (1) for conjoint rotation, and
a centrifugal disc (11) which is designed to be connected to an inner ring (2) of the wheel bearing (1) for conjoint rotation,
wherein the sealing unit (10) has a sealing carrier and a sealing element which is arranged on the sealing carrier,
wherein the centrifugal disc (11) has an encoder (13) on an outer end face (12), which encoder is designed to provide magnetic fields (14),
wherein the encoder (13) has a circumferential recess (19) which extends in an axial direction (A) and radially outwardly delimits a magnetisation region (16) of the encoder (13), **characterized in that** the encoder (13) extends in a radial direction (R) to below a sealing seat (20) of the centrifugal disc (11).

2. The sealing assembly (5) according to claim 1, wherein the magnetisation region (16) of the encoder (13) defines a detection region which is designed to be detected by a sensor (15).

3. The sealing assembly (5) according to claim 2, wherein the circumferential recess (19) is designed to position the detection region relative to the sensor (15).

4. The sealing assembly (5) according to any one of claims 1 to 3, wherein the encoder (13) has an elastomer-like carrier material with magnetisable particles.

5. The sealing assembly (5) according to claim 4, wherein the magnetisable particles which are arranged radially inside the circumferential recess (19) have a permanent magnetisation state.

6. A wheel bearing (1) for a wheel bearing hub (6) of a vehicle, having:
a rotatable inner ring (2) with an inner ring raceway (7),
a fixed outer ring (3) with an outer ring raceway (8),
a plurality of rolling bodies (4) which are arranged between the inner ring (2) and the outer ring (3) such that, when the inner ring (2) rotates relative to the outer ring (3), they roll on the inner ring raceway (7) and the outer ring raceway (8), and
a sealing assembly according to claim 1.

7. The wheel bearing (1) according to claim 6, further having an interface seal (23) which extends substantially in the axial direction (A) and is designed to seal an interface between the wheel bearing hub (6) and a joint housing, wherein a radially inner end (25) of the encoder (13) is arranged in the axial direction (A) between the inner ring (2) and the interface seal (23).

8. The wheel bearing (1) according to claim 7, wherein the radially inner end (25) of the encoder (13) has a first projection (26) which extends in the axial direction (A) and is designed to be in sealing contact with the interface seal (23).

9. The wheel bearing (1) according to claim 7 or 8, wherein the radially inner end (25) of the encoder (13) has a second projection which extends in the axial direction (A) and is designed to be in sealing contact with the inner ring (2).

## Revendications

1. Ensemble d'étanchéité (5) pour l'étanchéité d'un roulement de roue (1) pour un moyeu de roulement de roue (6) d'un véhicule, présentant :
une unité d'étanchéité (10) qui est conçue pour être reliée solidaire en rotation à une bague extérieure (3) du roulement de roue (1), et
un disque centrifuge (11) qui est conçu pour être relié solidaire en rotation à une bague intérieure (2) du roulement de roue (1),
dans lequel l'unité d'étanchéité (10) présente un support d'étanchéité et un élément d'étanchéité qui est agencé sur le support d'étanchéité,
dans lequel le disque centrifuge (11) présente un encodeur (13) sur une face d'extrémité extérieure (12) qui est conçu pour fournir des champs magnétiques (14),
dans lequel l'encodeur (13) présente un évidement circonférentiel (19) qui s'étend dans la direction axiale (A) et limite une zone de magnétisation (16) de l'encodeur (13) radialement vers l'extérieur, **caractérisé en ce que** l'encodeur (13) s'étend dans la direction radiale (R) jusqu'en dessous d'un siège d'étanchéité (20) du disque centrifuge (11).

2. Ensemble d'étanchéité (5) selon la revendication 1, dans lequel la zone de magnétisation (16) de l'encodeur (13) définit une zone de détection qui est conçue pour être détectée par un capteur (15).

3. Ensemble d'étanchéité (5) selon la revendication 2, dans lequel l'évidement circonférentiel (19) est conçu pour positionner la zone de détection par rapport au capteur (15).

4. Ensemble d'étanchéité (5) selon l'une des revendications 1 à 3, dans lequel l'encodeur (13) présente un matériau de support de type élastomère comportant des particules magnétisables.

5. Ensemble d'étanchéité (5) selon la revendication 4, dans lequel les particules magnétisables qui sont agencées radialement à l'intérieur de l'évidement circonférentiel (19) présentent un état de magnétisation permanent.

6. Roulement de roue (1) pour un moyeu de roulement de roue (6) d'un véhicule, présentant :
une bague intérieure (2) rotative comportant un chemin de roulement (7) de bague intérieure,
une bague extérieure (3) fixe comportant un chemin de roulement (8) de bague extérieure,
une pluralité d'éléments roulants (4) qui sont agencés entre la bague intérieure (2) et la bague extérieure (3) de telle sorte que, lors d'une rotation de la bague intérieure (2) par rapport à la bague extérieure (3), ils roulent sur le chemin de roulement (7) de bague intérieure et sur le chemin de roulement (8) de bague extérieure, et
un ensemble d'étanchéité selon la revendication 1.

7. Roulement de roue (1) selon la revendication 6, présentant en outre un joint d'interface (23) qui s'étend sensiblement dans la direction axiale (A) et qui est conçu pour sceller une interface entre le moyeu de roulement de roue (6) et une rotule, dans lequel une extrémité intérieure radiale (25) de l'encodeur (13) est agencée dans la direction axiale (A) entre la bague intérieure (2) et le joint d'interface (23).

8. Roulement de roue (1) selon la revendication 7, dans lequel l'extrémité intérieure radiale (25) de l'encodeur (13) présente une première saillie (26) qui s'étend dans la direction axiale (A) et qui est conçue pour être en contact étanche avec le joint d'interface (23).

9. Roulement de roue (1) selon la revendication 7 ou 8, dans lequel l'extrémité intérieure radiale (25) de l'encodeur (13) présente une seconde saillie qui s'étend dans la direction axiale (A) et qui est conçue pour être en contact étanche avec la bague intérieure (2).
